Europäisches Patentamt

European Patent Office

Office européen des brevets

(19)

(11) **EP 0 946 056 A1**

(12) **EUROPÄISCHE PATENTANMELDUNG**

(43) Veröffentlichungstag:
29.09.1999 Patentblatt 1999/39

(51) Int. Cl.⁶: **H04N 5/445**, H04N 5/00,
H04N 5/44

(21) Anmeldenummer: 99105817.3

(22) Anmeldetag: 23.03.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 27.03.1998 DE 19813784

(71) Anmelder: NOKIA TECHNOLOGY GmbH
75175 Pforzheim (DE)

(72) Erfinder:
• **Bollmann, Tilman**
45131 Essen (DE)
• **Hartwig, Stepan**
45276 Essen (DE)
• **Rautenberg, Thomas**
44795 Bochum (DE)

(54) **Verfahren zum Erhöhen der Speicherkapazität für Serviceinformation in einem Empfäger für digitale TV-Sendungen**

(57)  Die Erfindung betrifft ein Verfahren zum Erhöhen der Speicherkapazität für Serviceinformations-Daten (SI) in einem Empfänger für digitale TV-Sendungen, wie z. B. nach dem MPEG 2- und dem DVB-Standard. Die Erhöhung erfolgt, um eine größere Datenmenge an Serviceinformation abrufbereit zu halten, die zum Aufbau Anzeige eines interaktiven elektronischen Programmführers dient, der als "On Screen Display" (OSD) auf dem Bildschirm dargestellt wird. Ein solcher Programmführer soll die Sendungsauswahl erleichtern und das Einstellen des Empfängers auf die gewünschte Sendung automatisieren. Die Erfindung hat die Aufgabe, eine Lösung aufzuzeigen, die ein Vergrößern der Speicherkapazität insbesondere des genannten Cache-Bereichs ohne zusätzliche Hardware ermöglicht. Zur Lösung der Aufgabe wird während der Anzeige von graphischen Darstellungen auf der gesamten Bildschirmfläche als "Full Screen OSD"-Darstellung der unbelegte Bereich des Bildspeichers (MPEG-RAM) vom Videodecoder (V-DEC) als Cache-Bereich benutzt. In diesem Cache-Bereich puffert der für das Empfängermanagement zuständige Mikrocomputer (μC) einen möglichst großen Anteil der im Empfänger von einem Demultiplexer extrahierten Serviceinformation (SI) zum Aufbau des elektronischen Programmführers.

FIG. 2

EP 0 946 056 A1

**Beschreibung**

Die Erfindung betrifft ein Verfahren zum Erhöhen der Speicherkapazität für Serviceinformations-Daten in einem Empfänger für digitale TV-Sendungen, wie z. B. nach dem internationalen MPEG 2-Standard und den Standards des europäischen DVB-Systems. Die Erhöhung erfolgt, um eine größere Datenmenge an Serviceinformation abrufbereit zu halten, die zum Aufbau der Anzeige eines interaktiven elektronischen Programmführers dient, der als sogenanntes "On Screen Display" (OSD) auf dem Bildschirm dargestellt wird. Ein solcher Programmführer soll die Sendungsauswahl erleichtern und das Einstellen des Empfängers auf die gewünschte Sendung automatisieren. Darüber hinaus ist die Erfindung auch in Empfängern für andere digitale Übertragungssysteme anwendbar, bei denen neben der eigentlichen Nutzlast auch umfassende Zusatzinformation, insbesondere für eine komfortable Benutzerführung übertragen wird.

Digitale TV-Systeme übertragen in einem einzelnen Übertragungskanal gleichzeitig Video- und Audiokomponenten mehrerer TV-Programme sowie bei Bedarf auch zusätzlich Information von anderen Diensten mittels eines Transportzeitmultiplexes. Damit steht dem Benutzer ein Vielfaches der bisher verfügbaren Programme zur Verfügung. Dieses erschwert die Orientierung bei der Programmauswahl. Bisher benutzte Mittel, wie z.B. eine Programmzeitschrift in Papierform, sind wenig geeignet, die Vielfalt der parallel angebotenen Programme und anderer Anwendungen, nachfolgend als Dienste bezeichnet, übersichtlich darzustellen. Abhilfe schafft die Aufnahme von zusätzlicher Information in die Zusatzdaten, welche in jeden Transportmultiplex zum Steuern des Systems übertragen werden. Mit dieser zusätzlichen Information kann ein elektronischer Programmführer (EPG) auf dem Bildschirm dargestellt werden, der dem Benutzer einem Dialog zum Einstellen und Programmieren des Empfängers bietet.

Jeder Empfänger von digitalen Sendungen benötigt für seine technische Funktion Steuerdaten, wie unter anderem sogenannte "Packet_identifier" (PID), um beim Demultiplexen die paketierten Elementarströme (PES) vom empfangenen Transportstrom, die unter anderem komprimierte Video- bzw. Audiodaten enthalten, funktionell zuordnen zu können. Diese Steuerdaten werden als sogenannte programmspezifische Information (PSI) als Sektionen ("Sections"), und in gleicher Form wie die Video- und Audioelementarströme im Nutzlastteil jedes Transportmultiplexes übertragen. Die im DVB-Sytem benutzte Systemsteuerung wird in Übereinstimmung mit dem Internationalen Standard ISO/IEC 13818-1 (1994): "Information Technologie — Generic coding of moving pictures and associated audio information — Part 1: Systems" realisiert und deshalb als bekannt vorausgesetzt. Dieser Standard ermöglicht ein inhaltliches Erweitern der programmspezifischen Information (PSI) nach dem Bedarf der Dienstanbieter mittels zusätzlicher Sektionen, sogenannter "Private_sections".

Diese Erweiterung wird im DVB-Sytem genutzt. DVB-Signale übertragen somit zusätzlich zu der programmspezifischen Information (PSI) auch Serviceinformation (SI). Die Serviceinformation (SI) enthält übertragungstechnische Angaben und beschreibt insbesondere die Programm-Elementarströme (PES) nach Herkunft und Inhalt. Dieses ermöglicht ein automatisches Abstimmen des Empfängers auf den gewünschten Dienst und eine komfortable Benutzerführung durch die Vielfalt der übertragenen Dienste mittels des obengenannten elektronischen Programmführers

Die Struktur eines solchen Systems ist im Europäischen Telekommunikations-Standard pr ETS 300 468: „Digital broadcasting systems for television, sound and data services; Specification for Service Information (SI) in Digital Video Broadcasting (DVB) Systems", 13.02.1996, beschrieben. Danach werden PSI-Daten und SI-Daten in gleicher Form übertragen. Ein Transportmultiplex überträgt also Datenpakete mit Videoelementarströmen, Audioelementarströmen und Datenströme mit PSI- bzw. SI-Daten seriell in einer in Grenzen variablen Folge. Gemäß den genannten Standards sind sowohl die PSI-Daten als auch die SI-Daten in Form von Tabellen und Untertabellen angeordnet, wobei die Tabellen infolge ihres Umfangs auch über mehrere Sektionen von unterschiedlicher Länge verteilt sein können. Die SI-Tabellen, benutzen die Syntax des PSI-Standards und enthalten sogenannte "Descriptoren" zum Beschreiben des Inhalts und der Übertragungsdaten. Der Inhalt der SI-Tabellen kann abhängig vom Dienstanbieter verschieden sein. Ein wesentlicher Bestandteil ist die inhaltliche Information über Dienste und deren Programmbeiträge, sogenannte "Events", des empfaugenen Verteilernetzes und von anderen Verteilernetzen. Beispielsweise sind Angaben zur näheren Beschreibung der einzelnen Dienste, wie unter anderem der Name der Dienste und der Anbieter, die Dienstart und die nationale bzw. regionale Verfügbarkeit in sogenannte "Service Description"-Tabellen SDT enthalten. Von besonderer Bedeutung für eine komfortable Programmführung ist die Information sogenannter "Event Information"-Tabellen EIT. Diese Tabellen werden in jedem Transportstrom sowohl für die Dienste des empfangenen Transportstroms als auch für andere Transportströme bereitgestellt und enthalten in vielen Untertabellen Information zum aktuell, laufenden und zum darauffolgenden Programmbeitrag, aber auch entsprechende Zeitpläne zur Vorschau auf Beiträge der nächsten Stunden und Tage mit Startzeit, Dauer, Namen und inhaltlicher Beschreibung. Einige Programmanbieter senden derzeit Programmtabellen für eine Programmvorschau bis zu sieben Tagen.

Der Umfang der erforderlichen Datenmenge soll kurz an einem Beispiel gezeigt werden. Ein Verteilernetz mit zehn Transportströmen und acht Diensten pro Transportstrom weist 80 verschiedene Dienste auf. Wenn alle Dienste jeden Tag durchschnittlich 40 Programmbeiträge (Events) anbieten, so müssen für eine Wochenvorschau Daten für:

80 [Dienste] ∗ 40 Events ∗ 7 [Tage] = 22 400 Events

also von etwa 22 400 Programmbeiträgen zur Verfügung gestellt werden. Wenn jeder Programmbeitrag mit durchschnittlich 300 Byte beschrieben wird, so werden zum Beschreiben aller Programmbeiträge einer Woche "Event Information"-Tabellen und Untertabellen mit insgesamt etwa 22 400 ∗ 300 Byte = 6,7 MByte benötigt. Um dem Benutzer langes Warten auf die gewünschte Information zu ersparen, ist es wünschenswert, daß die Zugriffszeit zur gesamten EIT-Information nicht länger als 10 Sekunden beträgt. Dazu müßte diese komplett innerhalb einer Periodendauer, die deutlich unter 10 Sekunden liegt, periodisch übertragen werden. Dieses würde allein nur für das Übertragen der EIT-Information eine Datenrate von etwa 5 Mbit/sec erfordern. Diese Datenrate steht infolge der begrenzten Kanalbreite von maximal etwa 40 MBit/sec nicht zur Verfügung. Außerdem werden die "Event Information"-Tabellen mit verschiedener Priorität zur Verfügung gestellt. So werden die Tabellen zu den laufenden und nachfolgenden "Events" in einer wesentlich geringeren Periodendauer übertragen, als jene für eine komplette Zeitübersicht. Deshalb kann die Periodendauer zum Übertragen der EIT-Daten für eine Wochenübersicht bis zu 30 Sekunden betragen. Da außerdem im allgemeinen Zeitübersichten, welche über vier Tage hinausgehen, nur für den aktuellen Transportstrom übertragen werden, müssen die SI-Daten aus verschiedenen Transportströmen bezogen werden. Dieses erhöht wesentlich die Zugriffszeit auf bestimmte SI-Sektionen im Datenstrom bei der Nutzung einer Wochenübersicht.

Eine Zeitmultiplexübertragung, wie das MPEG-2-Verfahren, bedingt, daß die Sektionen der verschiedenen Signal- bzw. Datenkomponenten zu verschiedenen Zeiten also diskontinuierlich im Empfänger eintreffen und die Daten nach dem Demultiplexen bis zum Decodieren bzw. Auswerten im Empfänger gespeichert werden müssen. Zum Puffern der verschiedenen Elementarströme steht der Hauptsteuerung eines jeden Empfängers ein flüchtiger Arbeitsspeicher zur Verfügung, der entsprechende Pufferbereiche bereitstellt. Aus Kostengründen wurde in der Vergangenheit die Kapazität des flüchtigen Arbeitsspeichers relativ gering bemessen. In der Praxis ist allgemein eine Kapazität von 1 MByte üblich, so daß neben anderen Aufgaben nur ein relativ geringer Anteil von etwa 40 KByte für Serviceinformation in einem sogenannten Cache-Bereich bereitgestellt werden kann. Dieser Bereich wird benutzt, um unabhängig von der Dauer der Übertragungsperioden jederzeit z.B. eine Übersicht zu den laufenden und den darauffolgenden Sendungen darzustellen. Jedoch steht bereits gegenwärtig nicht ausreichend Speicherkapazität zur Verfügung, um den oben genannten Umfang an EIT-Daten zu puffern. Eine komfortable Benutzerführung mit einem Zeitplan von mindestens einer Woche kann deshalb nur realisiert werden, wenn die nicht im Pufferbereich befindlichen Daten direkt dem Transportstrom entnommen werden. Dieses kann aus den dargestellten Gründen jedoch mehr als eine Minute Wartezeit erfordern. Zum Abstellen dieses Mangels müßten neue Empfänger mit zusätzlicher Speicherkapazität ausgestattet werden und die bisher beim Kunden befindlichen Geräte mit entsprechender Hardware nachgerüstet werden. Dieses ist relativ aufwendig und daher unbefriedigend.

Es ist deshalb Aufgabe der Erfindung, eine Lösung aufzuzeigen, die ein Vergrößern der Speicherkapazität insbesondere des genannten Cache-Bereichs ohne zusätzliche Hardware ermöglicht.

Die Erfindung nutzt die Erkenntnis, daß während einer Wiedergabe von OSD-Anzeigen auf der gesamten Bildfläche des Empfängerbildschirms der überwiegende Teil im Bildspeicher des Videodecoders unbenutzt bleibt. Der Bildspeicher wird während des Decodierens überwiegend zur Prädiktion von Videobildern benutzt und ist deshalb während der Darstellung von OSD-Anzeigen auf der gesamten Bildschirmfläche nur gering ausgelastet. Darüber hinaus wird mit der Erfindung ausgenutzt, daß bestimmte Videodecoder mit dem Empfängermanagement über ein Interfacesystem verbunden sind, welches auch ein Lesen jener Daten ermöglicht, die sich im Bildspeicher des Videoprozessors befinden.

Zur Lösung der Aufgabe wird während der Anzeige von graphischen Darstellungen, wie die des elektronischen Programmführers, auf der gesamten Bildschirmfläche, d.h. während einer sogenannten "Full Screen OSD"-Darstellung, der unbelegte Bereich des Bildspeichers vom Videodecoder als Cache-Bereich benutzt. In diesen Cache-Bereich puffert der für das Empfängermanagement zuständige Mikrocomputer einen möglichst großen Anteil der im Empfänger von einem Demultiplexer extrahierten Serviceinformation zum Aufbau des elektronischen Programmführers. Der Mikrocomputer kann die von einen Benutzer gewünschten Teile der gepufferten Information sofort abrufen, wodurch entsprechende Wartezeiten bis zum nächsten Übertragen der entsprechenden Sektionen vermieden werden.

Die Erfindung soll nachstehend an einem Ausführungsbeispiel erläutert werden. Die entsprechenden Zeichnungen zeigen:

FIG. 1  Das Funktionsprinzip eines MPEG 2-Moduls in einem DVB-Empfänger nach dem Stand der Technik und bei der Lösung entsprechend der Erfindung während einer normalen DVB-Bildwiedergabe ohne die Anzeige von graphischen Darstellungen auf der gesamten Bildschirmfläche.

FIG. 2  Das Funktionsprinzip eines MPEG 2-Moduls in einem DVB-Empfänger entsprechend der Erfindung während der Wiedergabe von graphischen Darstellungen von Serviceinformation auf der gesamten Bildschirmfläche.

Zur Erläuterung des Problems, welches der Erfindung zu Grunde liegt, wird nachstehend das Prinzip der Signalrückgewinnung im Empfänger dargestellt.

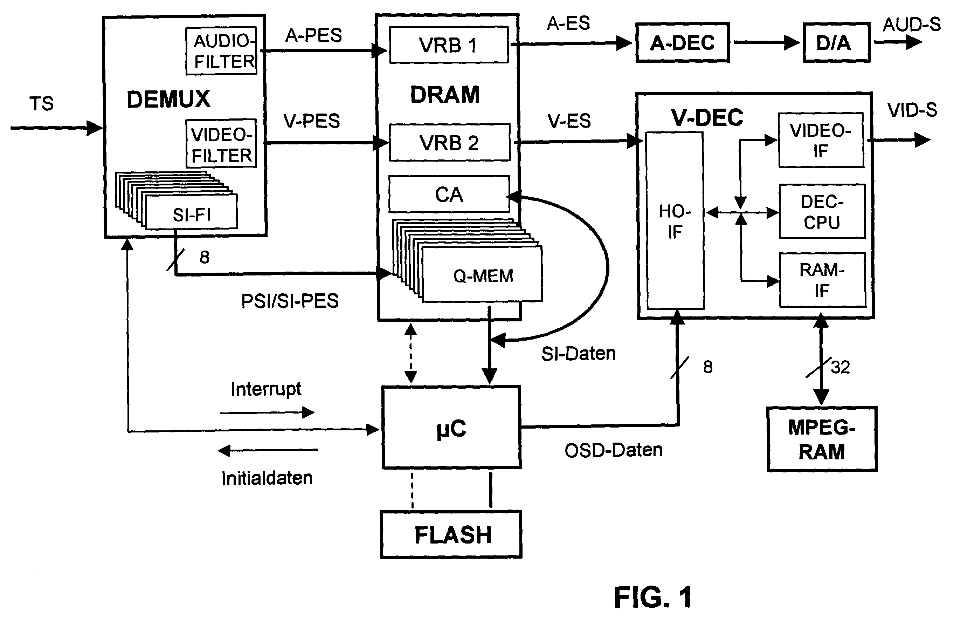

Das Empfangsmodul eines integrierten Empfänger-Decoders (IRD), im vorliegenden Fall zum Empfang von DVB-Sendungen, selektiert aus einer Mehrzahl von modulierten Transportmultiplexen, welche auf verschiedenen Kanälen, z.B. via Satellit oder einem Kabelnetz, zum Empfänger (IRD) gelangen, einen Multiplex und demoduliert diesen unter Nutzung eines Fehlerkorrektursystems. Das in FIG. 1 dargestellte MPEG-Modul zeigt eine bekannte Art zur Rückgewinnung der Signalkomponenten A-ES, V-ES eines einzelnen Dienstes aus einem empfangenen Transportstrom. Ein Demultiplexer DEMUX extrahiert mittels Filter, die über Initialdaten PID's von einem Mikrocomputer auf Datenpakete verschiedener Dienste eingestellt werden können, aus dem Transportstrom TS vom gewünschten Dienst die Datenpakete mit den komprimierten Daten des Audioelementarstroms A-PES und des Videoelementarstroms V-PES. Darüber hinaus weist im vorliegenden Beispiel der Demultiplexer DEMUX acht programmierbare Filter SI-FI zum Extrahieren von Sektionen mit PSI/SI-Daten auf. Damit können dem Transportstrom TS unter anderem auch die Datenpakete verschiedener SI-Sektionen, die sogenannten "Private_sections" entnommen werden. Ein MPEG 2-Audiodecoder A-DEC wandelt die extrahierten Datenpakete des Audioelementarstroms A-PES und ein Videoprozessor V-DEC die des Videoelementarstroms V-PES jeweils in den ursprünglichen unkomprimierten digitalen Signalstrom zurück. Der Mikrocomputer μC ermittelt unter anderem die Initialdaten aus den PSI-Daten und steuert den Signalfluß im gesamten MPEG-Modul. Dazu ist er mit dem erwähnten flüchtigen Arbeitsspeicher DRAM und einen nichtflüchtigen Arbeitsspeicher FLASH verbunden.

Zum besseren Verständnis der Funktion stellen Signal- und Steuerleitungen den Datenfluß zwischen den Funktionsgruppen dar anstelle von in der Praxis vorhandenen Datenbussen, wobei durchgehende Linien die Signalleitungen und unterbrochene Linien die Steuerleitungen zeigen. Die Pfeile kennzeichnen die Richtung des Datenflusses. Alle in FIG.1 gezeigten Funktionsgruppen werden vom Mikrocomputer μC initialisiert und gesteuert, auch wenn zur besseren Übersicht nicht alle Verbindungen dargestellt sind. Mindestens bei jedem Wechsel zu einem anderen Dienst stellt der Mikrocomputer μC Daten zum Konfigurieren des Empfängers bereit. Weiterhin realisiert der Mikrocomputer μC den Dialog mit dem Benutzer durch das Regenerieren des elektronischen Programmführers EPG und die Abfrage des Bediensystems.

Vor dem Übertragen speichert ein DVB-Sender entsprechend dem MPEG-2 Standard alle komprimierten Video- und Audiodaten, welche abhängig vom Bild- bzw. Toninhalt am Ausgang der MPEG-Coder mit variabler Datenrate auftreten, in entsprechende Puffer, um sie paketweise mit konstanter Datenrate zu übertragen.

Außerdem werden sowohl jedem Datenpaket als auch jeder Sektion ein entsprechender Kopfabschnitt, ein "Header", vorangestellt und im Nutzlastteil zusätzliche Daten zum Identifizieren (ID's) von Angaben und für das Systemmanagement zugefügt, wie beispielsweise Zusatzheader, eine Zeitreferenz (PCR). Da die MPEG-Decoder nicht alle diese zusätzlichen Daten benötigen, müssen diese vor dem Decodieren teilweise entfernt und die ursprünglich variable Datenrate der Elementarströme wieder hergestellt werden. Dafür wird der paketierte Audioelementarstrom A-PES vom Ausgang des Demultiplexers DEMUX in einen Pufferbereich VPB 1 und der Videoelementarstrom V-PES in einen Pufferbereich VRB 2 des flüchtigen Arbeitsspeichers DRAM geleitet. Der Mikrocomputer μC leitet die paketierten Elementarströme A-PES und V-PES mit reduziertem Datenumfang und der ursprünglichen variablen Datenrate an die MPEG 2-Videodecoder V-DEC bzw. den MPEG 2-Audiodecoder A-DEC weiter.

Der in FIG. 1 dargestellte Videodecoder V-DEC ist eine relativ komplexe Schaltung mit einem eigenständigen Decoderprozessor DEC-CPU und einem internen Bussystem, das mit den übrigen Komponenten des Empfängers über verschiedene Interfaceschnittstellen kommuniziert. So gelangt der komprimierte Videoelementarstrom V-ES über eine Eingangsschnittstelle HO-IF in den Decoder V-DEC. Das dekodierte und dekomprimierte Bildsignal wird über eine Videoschnittstelle VIDEO-IF zur Bildwiedergabe, z. B. über ein Fernsehgerät bereitgestellt. Der Decoderprozessor DEC-CPU realisiert auch die Prädiktion der Videobilder. Dazu ist er über eine Speicherschnittstelle RAM-IF mit einem flüchtigen Bildspeicher MPEG-RAM verbunden. Dieser weist gewöhnlich eine Speicherkapazität von mindestens 2 MByte auf. Da zwischen diesem Bildspeicher und dem Decoder-prozessor DEC-CPU ein erheblich größerer Datenstrom pro Zeiteinheit bewegt werden muß, als zwischen dem Mikrocomputer μC und dem Arbeitsspeicher DRAM, weist das RAM-Interface RAM-IF mindestens einen 32 Bit-Bus auf.

Im vorliegenden Beispiel realisiert der Decoderprozessor DEC-CPU auch die Überlagerung von Graphikdarstellungen bei der TV-Bildwiedergabe, wie das Einblenden von OSD-Darstellungen in das Bildsignal VID-S. Es sei jedoch ausdrücklich darauf hingewiesen, daß diese Funktionskombination für die Ausführung der Erfindung nicht unbedingt benötigt wird. Die Graphikdarstellungen an sich steuert der Mikrocomputer μC ebenfalls über das Eingangsinterface HO-IF, wobei er in dieser Zeit die für die OSD-Einblendung erforderlichen Bildpunktwerte (Bitmaps) in einen Teil des Bildspeichers MPEG-RAM speichert.

Ebenso wie die Sektionen der Elementarströme V-PES und A-PES werden die der Datenströme mit PSI- und SI-Daten zwischengespeichert. Dazu nimmt die selektierten Datenpakete mit den benötigten PSI/SI-Datensektionen während des Extrahierens aus dein Transportstrom TS entsprechend der Art der Tafeln jeweils ein separater Speicherbereich Q-MEM des flüchtigen Arbeitsspeichers DRAM auf. Aufgrund der begrenzten Speicherkapazität des Empfängers und können nur ausgewählte Daten des empfangenen SI-Datenstroms abgespeichert werden. Die Auswahl von relevanten Daten zur Information des Benutzers während der Programmwiedergabe übernimmt der Mikrocomputer μC und überträgt diese anschließend in konzentrierter Form als SI-Datenstrom SI-DS in einem anderen Bereich des Arbeitsspeichers, der nachfolgend als Cache-Bereich CA bezeichnet wird, um die separaten Speicherbereiche Q-MEM sofort mit neuen eingehenden EIT-Daten beschreiben zu können. Die beschränkte Größe der Speicherbereiche Q-MEM sowie die benötigte Rechenkapazität zum Extrahieren der Daten führen zu einer Verlängerung der zum Füllen des Caches benötigten Zeit um ein Vielfaches der Übertragungsperiode der SI-Daten.

Der Inhalt des Cache-Bereichs CA dient bei einem Empfänger entsprechend der vorliegenden Erfindung dazu, z. B. ständig die Information zum laufenden Programmbeitrag und den nächst folgenden Beiträgen abrufbereit zu halten. Diese werden unmittelbar nach erfolgtem Abruf durch den Benutzer ohne Wartezeit als OSD-Graphik-Block in die Bildwiedergabe des laufenden Programmes eingeblendet. Dafür kann gegenüber den bekannten Lösungen der Cache-Bereich CA auch verkleinert werden.

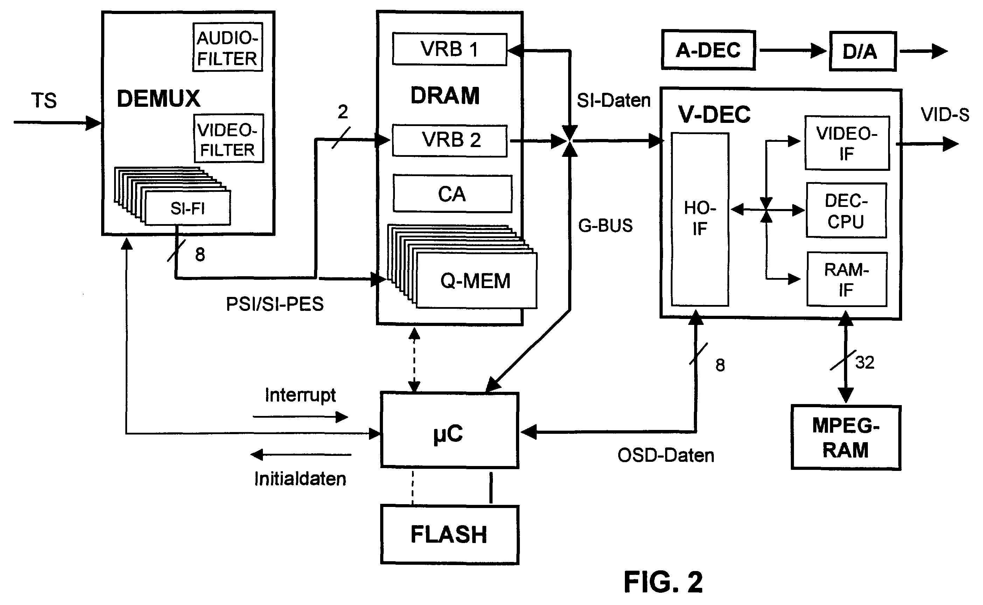

Um entsprechend der Aufgabenstellung der Erfindung die Speicherkapazität des genannten Cache-Bereichs ohne zusätzliche Hardware zu vergrößern, wird gemäß der vorliegenden Erfindung während der Graphikdarstellung des elektronischen Programmführers EPG die gesamte Bildschirmfäche genutzt. Die damit verbundene Betriebsart des Empfängers wird nachfolgend als EPG-Modus bezeichnet. Die Funktion des MPEG-Moduls während des EPG-Modus ist in FIG.2 dargestellt. Es wird ausdrücklich darauf hingewiesen, daß gemäß der Aufgabenstellung der Erfindung die Hardware-Struktur des MPEG-Moduls gegenüber der bekannten Lösung nicht verändert wird. Damit bietet die Erfindung den wesentlichen Vorteil, daß auch bereits in Benutzung befindliche DVB-Empfänger durch ein entsprechendes Softwareprogramm, welches mit einem Transportmultiplex in das Betriebssystem des Empfängers geladen wird, entsprechend neu konfiguriert werden können.

Das Umschalten des Empfängers in den EPG-Modus hat den Vorteil, daß während dieser Zeit das Videosignal VID-S an der Videoschnittstelle VIDEO-IF des Videodecoders V-DEC nur OSD-Information für graphische Darstellungen enthält, die im MPEG-Modul generiert wird. Da im EPG-Modus kein Fernsehbild wiedergegeben werden kann, muß der Decoder V-DEC während dieser Zeit auch keinen Elementarstrom mit Videodaten V-ES decodieren. Damit wird auch der Bildspeicher MPEG-RAM nicht zur Prädiktion der Bilder benötigt. Folglich ist der Bildspeicher MPEG-RAM während dieser Zeit nur mit den für die OSD-Einblendung erforderlichen Bildpunktwerten (Bitmaps) belegt und damit zu mehr als 1,5 MByte frei. Wie FIG. 2 zeigt, sind deshalb weder das Audiofilter noch das Videofilter des Demultiplexers DEMUX mit den Pufferbereichen VRB 1 und VRB 2 im flüchtigen Arbeitsspeicher DRAM verbunden. Statt dessen werden zumindest zwei der acht programmierbaren Filter SI-FI mit dem Pufferbereich VRB 2 verbunden, um Sektionen mit SI-Daten statt in den Cache-Bereich CA des Arbeitsspeichers DRAM in den unbenutzten Bereich des Bildspeichers MPEG-RAM zu leiten. Von diesen Filtern SI-FI ist je eines zum Extrahieren aller Sektionen mit "Event Information"-Tabellen für eine Zeitübersicht des aktuellen Transportstroms TS bzw. der anderen Transportströme programmiert. Damit werden unabhängig von einer Anforderung durch einen Benutzer die über den Transportstrom TS eingehenden, unmittelbar aufeinanderfolgenden SI-Daten mit "Event Information"-Tabellen im Umfang der zur Verfügung stehenden Speicherkapazität im Bildspeicher MPEG-RAM zum Abruf bereitgehalten. Das Schreiben in den Speicher erfolgt so lange, bis entweder der Bildspeicher MPEG-RAM voll belegt ist oder die Übertragungsperiode der Tafeln neu beginnt. Somit steht ohne ein Erweitern der Software ein großer Teil des Bildspeichers über das Eingangsinterface HO-IF für den Mikrocomputer μC als Cache-Bereich zum Aufbauen des interaktiven Programmführers EPG zur Verfügung. Da der Demultiplexer DEMUX die "Event Information"-Tabellen mit der Übertragungsgeschwindigkeit des Systems liefert, kann der Cache-Bereich im Bildspeicher MPEG-RAM innerhalb einer Übertragungsperiode ein Vielfaches an Sektionen mit "Event Information"-Tabellen und Untertabellen speichern als bei der bekannten Lösung. Da die Zugriffsgeschwindigkeit auf diese Daten bei bis zu 1 500 KBytes liegt` kann ein beachtlicher Teil der "Event Information"-Tabellen, nämlich diese konzentriert gespeicherten Daten, nach der ersten Übertragungsperiode beliebig oft und sehr schnell entsprechend den Wünschen des Benutzers angezeigt werden.

Zum Verwalten der Adressen des Cache-Bereichs im Bildspeicher MPEG-RAM wird ein Index benötigt. Diesen legt der Mikrocomputer μC in seinem flüchtigen Arbeitsspeicher DRAM an. Im Ausführungsbeispiel wird dafür der Pufferbereich VPB 1 belegt. Dieses hat jedoch den Nachteil, daß während des EPG-Modus auch der Audiodecoder A-DEC ohne Funktion ist. Um dieses zu vermeiden und beispielsweise den Start des nächsten Programmbeitrages akustisch zu registrieren, kann auch der während des EPG-Modus nicht benutzte Cache-Bereich CA im Arbeitsspeicher DRAM für den Index benutzt werden.

## Patentansprüche

1. Verfahren zum Erhöhen der Speicherkapazität für Informationsdaten in einem Empfänger für digitale TV-Sendungen, welche in Form eines Transportmultiplexes mit mindestens je einem paketierten und komprimierten Elementarstrom mit Videodaten (V-PES), Audiodaten (A-PES) und Serviceinformationsdaten (SI-PES) übertragen werden,

bei dem die entpackten Daten mit Serviceinformation (SI) in einem Cache-Bereich gespeichert und auf Anforderung eines Benutzers auf einem Bildschirm graphisch dargestellt wird

und bei dem zur Wiedergabe einer TV-Sendung ein Mikrocomputer (µC) den entpackten Elementarstrom mit komprimierten Videodaten (V-ES) zum Decodieren zu einem Videodecoder (V-DEC) mit einem separaten Bildspeicher (MPEG-RAM) für die Prädiktion von Videobildern überträgt,
**dadurch gekennzeichnet,**
daß der Empfänger zumindest zeitweise auf der gesamten Bildschirmfläche Serviceinformation (SI) graphisch darstellt anstelle der Wiedergabe der TV-Sendung,
daß während des graphischen Darstellens auf der gesamten Bildschirmfläche der Mikrocomputer µC das Decodieren der Videodaten (V-ES) im Videodecoder (V-DEC) unterbricht, so daß ein zur Prädiktion genutzter Bereich des Bildspeichers (MPEG-RAM) unbelegt ist und
daß dieser unbelegte Bereich mit Serviceinformation (SI) belegt und vom Mikrocomputer (µC) als Cache-Bereich genutzt wird.

2. Verfahren nach Anspruch 1, dadurch gekennzeichnet, daß während der Wiedergabe einer TV-Sendung zum Speichern von Serviceinformation (SI) ein um ein Vielfaches kleinerer zweiter Cache-Bereich (CA) in einem flüchtigen Arbeitsspeicher (D-RAM) belegt wird, den der Mikrocomputer (µC) direkt verwaltet.

3. Verfahren nach Anspruch 1, dadurch gekennzeichnet, daß in den im Bildspeicher (MPEG-RAM) genutzten Cache-Bereich unabhängig von Anforderungen eines Benutzers alle über den Transportstrom (TS) in unmittelbarer Folge eingehenden Sektionen mit Serviceinformation für "Event Information"-Tabellen entsprechend der vorhandenen Speicherkapazität geschrieben werden.

4. Verfahren nach Anspruch 1, dadurch gekennzeichnet, daß der Austausch der Serviceinformationsdaten (SI) zwischen dem Mikrocomputer (µC) und dem Bildspeicher (MPEG-RAM) über die Eingangsschnittstelle (HO-IF) und der Speicherschnittstelle (RAM-IF) des Videodecoders erfolgt.

5. Verfahren nach Anspruch 4, dadurch gekennzeichnet, daß die SI-Daten vor dem Schreiben in den Bildspeicher (MPEG-RAM) in einem ersten Pufferbereich (VRB2) zwischen gespeichert werden, der während der Wiedergabe einer TV-Sendung zum Puffern des paketierten Video-Elementarstroms (V-PES) beim Wiederherstellen der ursprünglichen variablen Übertragungsrate benutzt wird.

6. Verfahren nach Anspruch 1, dadurch gekennzeichnet, daß während des graphischen Darstellens von Serviceinformation auf der gesamten Bildschirmfläche der Mikrocomputer µC zum Verwalten der Adressen des Bildspeicher (MPEG-RAM) einen Indexspeicherbereich anlegt.

7. Verfahren nach Anspruch 6, dadurch gekennzeichnet, daß der Indexspeicherbereich im flüchtigen Arbeitsspeicher (D-RAM) liegt, den der Mikrocomputer (µC) direkt verwaltet.

8. Verfahren nach Anspruch 7, dadurch gekennzeichnet, daß der Indexspeicherbereich in einem zweiten Pufferbereich (VRB 1) im flüchtigen Arbeitsspeicher (D-RAM) liegt, welcher bei der Wiedergabe einer TV-Sendung zum Puffern des paketierten Audio-Elementarstroms (A-PES) beim Wiederherstellen der ursprünglichen variablen Übertragungsrate benutzt wird.

9. Verfahren nach Anspruch 2 und 7, dadurch gekennzeichnet, daß der Indexspeicherbereich der zweite Cache-Bereich (CA) im flüchtigen Arbeitsspeicher (D-RAM) ist.

FIG. 1

TS → DEMUX

DEMUX
- AUDIO-FILTER
- VIDEO-FILTER
- SI-FI
  8

PSI/SI-PES

DRAM
- VRB 1
- VRB 2
- CA
- Q-MEM

2

SI-Daten

G-BUS

A-DEC → D/A

V-DEC
- VIDEO-IF
- DEC-CPU
- RAM-IF
- HO-IF

VID-S

32 → MPEG-RAM

8

OSD-Daten

μC

Interrupt

Initialdaten

FLASH

FIG. 2

8

| | Europäisches Patentamt | EUROPÄISCHER RECHERCHENBERICHT | Nummer der Anmeldung |
|---|---|---|---|
| | | | EP 99 10 5817 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | EP 0 827 340 A (MATSUSHITA ELECTRIC IND CO LTD) 4. März 1998 * Spalte 6, Zeile 15 - Spalte 33, Zeile 13 * | 1,2,4, 6-8 | H04N5/445 H04N5/00 H04N5/44 |
| | --- | | |
| Y | EP 0 772 159 A (SGS THOMSON MICROELECTRONICS) 7. Mai 1997 * Seite 6, Zeile 53 - Seite 10, Zeile 24 * | 1,2,4, 6-8 | |
| | --- | | |
| A | US 5 602 920 A (BESTLER CAITLIN B ET AL) 11. Februar 1997 * Spalte 4, Zeile 24 - Spalte 7, Zeile 51 * | 1-9 | |
| | --- | | |
| A | US 5 477 263 A (LEW EUGENE L ET AL) 19. Dezember 1995 * Spalte 8, Zeile 14 - Zeile 51 * | 1-9 | |
| | --- | | |
| D,A | EUROPEAN BROADCASTING UNION: "digital broadcasting systems for television, sound and data services;specification for service information (SI) in digital video broadcasting (DVB) systems" EUROPEAN TELECOMMUNICATION STANDARD, Seite 45 XP002079535 | 1-9 | RECHERCHIERTE SACHGEBIETE (Int.Cl.6)  H04N |
| | ----- | | |

Der vorliegende Recherchenbericht wurde für alle Patentansprüche erstellt

| Recherchenort | Abschlußdatum der Recherche | Prüfer |
|---|---|---|
| BERLIN | 21. Juni 1999 | Materne, A |

**ANHANG ZUM EUROPÄISCHEN RECHERCHENBERICHT**
**ÜBER DIE EUROPÄISCHE PATENTANMELDUNG NR.**          EP 99 10 5817

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-06-1999

| Im Recherchenbericht angeführtes Patentdokument | Datum der Veröffentlichung | Mitglied(er) der Patentfamilie | Datum der Veröffentlichung |
|---|---|---|---|
| EP 0827340 A | 04-03-1998 | CN 1191449 A<br>JP 10126753 A | 26-08-1998<br>15-05-1998 |
| EP 0772159 A | 07-05-1997 | FR 2740583 A<br>EP 0827110 A<br>JP 10145739 A | 30-04-1997<br>04-03-1998<br>29-05-1998 |
| US 5602920 A | 11-02-1997 | KEINE | |
| US 5477263 A | 19-12-1995 | US 5594492 A | 14-01-1997 |

EPO FORM P0461

Für nähere Einzelheiten zu diesem Anhang : siehe Amtsblatt des Europäischen Patentamts, Nr.12/82